# EUROPEAN PATENT APPLICATION

(11) **EP 3 499 662 A1**
(43) Date of publication of application: **19.06.2019**
(21) Application number: 17380029.3
(22) Date of filing: 13.12.2017
(51) Int. Cl.: H02G 1/10, E02F 5/10, B63B 35/04, F03D 80/80

(54) **ASSEMBLY AND METHOD FOR INSTALLING A SUBMARINE LINE**

(71) Applicant: Fundación Tecnalia Research & Innovation, 20009 Donostia-San Sebastian, Guipuzcoa (ES)
(72) Inventor: Rico Rubio, Antonio, 48160 Derio Bizkaia (ES); Berque, Joannes, 48160 Derio Bizkaia (ES); Sellner, Jan, 48160 Derio Bizkaia (ES); Nava, Vincenzo, 48009 Bilbao (ES); Villate Martínez, José Luis, 48160 Derio Bizkaia (ES)
(74) Representative: Balder IP Law, S.L.

(57) **Abstract**

An assembly (400) for installing a submarine line (304), comprising: a submersible vehicle (200) that comprises a chassis (201) and means of movement (208); and a submersible device (300) that comprises the submarine line, wherein the submersible device is configured to be connected to the submarine line, and to be connected to the submersible vehicle; the submersible vehicle is configured to be connected to the submersible device; the submersible device is configured to receive energy through the submarine line and to transfer energy to the submersible vehicle when the submarine line is connected to an installation (101) that comprises an energy source; and wherein the assembly is configured to install the submarine line while the submersible device receives energy through the submarine line and transfers energy to the submersible vehicle. There is also a method for installing a submarine line with an assembly that comprises a submersible vehicle and a submersible device. There is also a system (700) that comprises: an installation (701) that comprises at least one energy source; and an assembly for installing a submarine line.

## Description

### TECHNICAL FIELD

The present invention relates to the field of installing submarine lines, and more specifically, the invention relates to an assembly and a method for installing a submarine line.

### BACKGROUND OF THE INVENTION

The digging of trenches and/or laying of lines may be complex tasks when carried out underwater. The installation of submarine lines is particularly complex because it requires divers and/or machines to lay the lines and/or bury the lines, tasks that must be carried out at a depth which may range from several meters to several hundreds of meters, even up to several kilometers (for example, in the open sea). In some cases, the divers and/or machines must also dig the trenches into which the lines are introduced. At such depths, the pressure is several times greater than at the surface, and visibility is poor or non-existent, thus complicating any operation carried out underwater.

Although the line may be buried into the sea floor, when installing submarine lines, it may also be necessary to carry out some tasks away from the water (for example, on the surface), such as, for example, connecting the submarine line to other lines or connectors. Thus, one or both ends of the submarine line must be brought to the surface to make said connection, which may not even be simple.

The handling of a submarine line may not be limited to the first time that the line is set when building a new marine installation. Particularly, submarine lines are susceptible to faults or breakage due to the exposure thereof to severe conditions such as, for example, the aforementioned high pressure, sea currents, erosion, etc. Therefore, it may be necessary to replace the lines frequently. Delaying the replacement of a broken or failed line may entail long downtimes in which energy is not transferred, there is a loss of communications and there are economic losses resulting from said situations.

In the prior art, techniques were developed to install lines in hard-to-reach areas or areas under conditions that hinder the installation, such as the sea.

The patent document WO-2012/007790-A1 discloses a system for submarine cable installation with a vehicle capable of digging trenches that connects to a vessel on the surface by means of a cable. The vehicle includes a container in which the cable to be installed, as well as a tensioner, is stored. The cable is installed by means of the tensioner as the vehicle moves and digs the trench. The crew of the vessel on the surface controls the vehicle via the cable that connects the vessel to the vehicle; said cable provides electrical power to the vehicle to operate the vehicle, as well as a data transmission link that the crew can use.

The patent document US-3434297-A relates to a machine for burying an ocean cable with a system for taking the cable and introducing it into a trench. The machine comprises a boom that can detect the position of the cable on the sea floor, means of movement in the form of two track chains, lights and a camera for monitoring the operation thereof. The machine is coupled to a vessel with a cable that is used to provide electrical power and transmit data to the machine, thus allowing it to operate and be able to bury the cable.

Both documents of the prior art disclose the use of a vessel on the surface that provides electrical energy (through a cable or line) to a machine or vehicle so that it can dig and introduce the cable into the trench.

The need for a vessel on the surface limits the installation of submarine lines to the periods when the vessel is available (only a limited number of vessels can install submarine lines) and when the weather and sea conditions are favorable. When the submarine cables interconnect wind turbines from a wind farm, or wave energy converters, the force of the wind and waves can hinder the operation of a vessel. Even if the vessel can withstand said conditions, the tasks that must be carried out entail a great risk to the crew, particularly the divers, and a risk to the lines to be installed, since they are subjected to stresses and bend radii that may damage the lines, in addition to there being a lack of accuracy in the laying of these lines. Therefore, the installation and/or replacement of submarine lines may be impossible during long periods of time.

Furthermore, the use of vessels, as well as the crew thereof, is economically expensive, and although the costs of wind turbines or wave energy converters are progressively reduced due to the development of new, more profitable and/or cost-effective components, the cost of the complete installation of lines or cables is not reduced, which is mainly due to the digging of trenches and laying of lines, and particularly due to the need for the vessels.

Therefore, innovation in the field of installing submarine lines is considered to be necessary. In this sense, it would be advantageous to reduce the necessity for divers and vessels on the surface whose presence largely depends on the availability of both, as well as the conditions of the environment, in other words, the conditions of the sea, wind, etc.

### DESCRIPTION OF THE INVENTION

A first aspect of the invention presents an assembly for installing a submarine line, comprising:
a submersible vehicle comprising a chassis and means of movement;
a submersible device that comprises the submarine line to be installed, in which the submersible device is configured to be connected to the submarine line, and to be connected to the submersible vehicle;
the submersible vehicle is configured to be connected to the submersible device;
the submersible device is configured to receive energy through the submarine line and to transfer energy to the submersible vehicle when the submarine line is connected to an installation that comprises an energy source; and
the assembly is configured to install the submarine line while the submersible device receives energy through the submarine line and transfers energy to the submersible vehicle.

In the context of the present disclosure, installing a submarine line refers to laying a submarine line in a sea environment, for example, on the sea floor or in a trench in the sea floor. Furthermore, in some embodiments, installing a submarine line also refers to laying a submarine line and connecting one or both ends of the submarine line to connectors or outlets of other lines or cables, or installations such as those indicated above, for example. A submarine line is a line or cable that can at least transport energy and is suitable for underwater environments; in this regard, the submarine line can remain completely or partially underwater (one part may remain outside of the water). These submarine lines are different from other lines that are generally used outside of the water since the submarine lines are adapted to withstand high stresses and pressures, erosion and other adverse phenomena that usually occur in the sea environment.

The assembly of the present disclosure may install a submarine line that transports energy, for example, electrical energy, hydraulic energy and/or pneumatic energy, in other words, which transports electrical power, hydraulic power and/or pneumatic power. This line may, for example, interconnect wind turbines from a wind farm, connect wind turbines to a substation, connect wave energy converters to each other or to a substation, etc., wherein the line is laid or installed in the sea environment; for example, in the case of the wind farm, it is in a sea environment such as a sea or an ocean.

The assembly of the present disclosure is configured to install a submarine line at the same time that the assembly receives energy through said line, such that the assembly is energized by the line when installed. This means that the assembly obtains electrical power, hydraulic power and/or pneumatic power through the line that it installs in the sea environment (sea or ocean, for example).

Since the assembly is powered through the submarine line that it installs, it is not necessary to provide additional energy to power the assembly (and to therefore power the submersible device and the submersible vehicle), for example, through an umbilical cable connected to a vessel on the surface (which requires a crew and appropriate weather conditions to correctly and safely operate the vessel). Therefore, in embodiments of the invention, a first end of the submarine line connects to an installation with an energy source (for example, a substation of an offshore wind farm, an offshore wind turbine, a wave energy converter, a ground substation close to the coast, etc.), or it connects to a cable or line connected to said installation with the energy source, in order to be able to transfer energy from said installation to the assembly of the present disclosure when a second end of the line connects to said assembly. In the context of the present disclosure, the connection of the first end to the installation with an energy source may be carried out by means of another connected line or cable (in other words, there does not have to be a direct connection): a first end of this other line or cable connects to the installation and a second end of this other line or cable connects to the first end of the submarine line to be installed.

The assembly can be moved in the sea environment by using the means of movement of the submersible device. In preferred embodiments, the means of movement comprise a plurality of track chains that provide the submersible vehicle with a suitable grip and maneuverability, such that it can be adapted to the surface (for example, sea floor, ground, etc.) on which the line should be laid, regardless of the irregularities present on said surface. In some embodiments, the submersible vehicle is further configured to energize the means of movement with energy received from the submersible device. In some of these embodiments and in other embodiments, the submersible vehicle is further configured to energize the means of movement with energy of at least one battery.

The submersible vehicle further comprises a connector for connecting to the submersible device; and the submersible vehicle further comprises a first connector for connecting to the submarine line, and a second connector for connecting to the submersible vehicle.

In some embodiments, the connector of the submersible vehicle connects to the second connector of the submersible device. When making said connection, the submersible device can transfer energy to the submersible vehicle.

In some other embodiments, the assembly further comprises a submersible line adapted to be connected to the connector of the submersible vehicle and to the second connector of the submersible device. When connecting the ends of the submersible line in this way, the submersible device can transfer energy to the submersible vehicle through the submersible line.

In some embodiments, the submersible vehicle further comprises a second connector (the connector for connecting to the submersible device being a first connector) to connect to a submersible line. Through this second connector, the submersible vehicle is configured to transfer and/or receive energy and/or data to/from another submersible vehicle (for example, from another assembly for installing a submarine line), to another underwater device (such as, for example, a remotely operated vehicle for underwater inspection) or to another offshore installation (such as, for example, a recharge point for its batteries).

In some embodiments, each connector of the submersible vehicle (for example, the first connector or the first and second connectors) and the second connector of the submersible device is an underwater connector (such as, for example, wet-mate type subsea connectors, which are connectable underwater). In some of these embodiments, the first connector of the submersible device is an underwater connector. The use of underwater connectors allows the connections of the submarine line, of the submersible vehicle and of the submersible device to be carried out underwater as well.

In some embodiments, the submersible device further comprises a hydraulic unit to transform electrical energy into hydraulic energy; the energy that the submersible device transfers to the submersible vehicle is hydraulic energy; and the energy that the submersible device receives through the submarine line is electrical energy.

The hydraulic unit of the submersible device makes it possible to increase the energy efficiency of the assembly. When the energy that is transferred from the installation containing the energy source to the assembly through the submarine line is electrical, despite the submarine line being longer than one kilometer (and even longer than 20 kilometers), the losses in electrical power transferred to the assembly are generally lower than the losses that would exist with hydraulic or pneumatic power transferred to the assembly in the case that hydraulic or pneumatic energy were transferred.

When receiving electrical energy in the submersible device, part of this energy or the whole thereof is transformed into hydraulic energy. A part or whole of this hydraulic energy is transferred to the submersible vehicle. When the submersible vehicle is very close to the submersible device, the loss of hydraulic power is reduced. Hydraulic energy, and therefore hydraulic power, can be suitable for powering components of the submersible vehicle, for example, the means of movement, the means of propulsion (which also move the assembly), or the means for digging a trench in those embodiments in which the submersible vehicle comprises some of these means.

In some embodiments, each energy received by the submersible device through the submarine line to be installed and the energy transferred by the submersible device to the submersible vehicle is electrical energy or hydraulic energy, in other words, the forms of these energies are electrical or hydraulic. In these embodiments, the submersible device transfers energy of the same type that it receives through the submarine line to the submersible vehicle. This configuration may simplify the complexity of the assembly. Likewise, in some of these embodiments, the submersible device further comprises a hydraulic unit for transforming electrical energy into hydraulic energy. In said embodiments, the submersible device uses this hydraulic energy to power some of the components thereof, even though it does not transfer said hydraulic energy to the submersible vehicle.

In some embodiments, each energy received by the submersible device through the submarine line to be installed and/or the energy transferred by the submersible device to the submersible vehicle is electrical energy and hydraulic energy, in other words, the forms of these energies are electrical and hydraulic. In some of these embodiments, the installation comprises two energy sources: one source of electrical energy and one source of hydraulic energy. The submersible device receives electrical energy as well as hydraulic energy from the installation (through the submarine line). In some of these embodiments and in other embodiments, the submersible device transfers electrical energy as well as hydraulic energy to the submersible vehicle.

In some embodiments, the submersible device comprises means for adapting the energy that it receives through the submarine line. These means for adapting energy may be, for example, an electrical voltage transformer, a hydraulic or pneumatic pressure regulator, or a hydraulic or pneumatic flow regulator. With said means, the submersible device modifies one of: the electrical voltage, the hydraulic or pneumatic pressure, and the hydraulic or pneumatic flow. The energy supplied at the outlet of the means may be adapted to facilitate the powering of the submersible device and/or the submersible vehicle; this energy provided at the outlet may be partially or completely transferred to the submersible vehicle.

In some embodiments, the submersible vehicle further comprises a hydraulic unit to transform electrical energy into hydraulic energy, and/or to transform hydraulic energy into electrical energy, at least part of the energy that the submersible vehicle receives from submersible device.

The submersible vehicle can transform electrical energy into hydraulic energy to power some of the components thereof. This electrical energy may come from the submersible device and/or from at least a battery in those embodiments in which the submersible vehicle comprises it. The latter may provide electrical energy when the submersible vehicle does not receive energy from the submersible device (due to the fact that it is not receiving energy through the submarine line, or due to the fact that it is not loaded on the chassis of the submersible vehicle), and in order to power some of the components of the submersible vehicle, it may be a good idea or necessary to transform said electrical energy into hydraulic energy.

In some embodiments, the submarine line comprises at least one line for transmitting data; and the submersible device is further configured to transmit and receive data through the submarine line.

The assembly may be monitored and/or controlled by data transmissions through the submarine line. Particularly, the data may comprise instructions related to the operation of the assembly, in other words, instructions for actuating the components of the submersible device, as well as measurements of sensors comprised in the submersible device and/or data generated by one or more processing units comprised in the submersible device.

In some embodiments, the submersible device is further configured to transmit data to and/or receive data of the submersible vehicle wirelessly or through a submersible connection line from the submersible device to the submersible vehicle.

To monitor and/or control the assembly, data transmission between the submersible device and the submersible vehicle may be carried out. In this regard, the instructions that are sent through the submarine line, once received in the submersible device, can be transmitted by this device to the submersible vehicle; the submersible device itself may also generate data that should be transmitted to the submersible vehicle. Furthermore, the measurements of sensors comprised in the submersible vehicle and/or data generated by one or more processing units comprised in the submersible vehicle may be transmitted to the submersible device, which, in turn, may use them in monitoring and/or control operations, and/or transmit them through the submarine line.

In some embodiments, the submersible device comprises a wireless data transmission and reception system. The wireless data transmission and reception system is configured to transmit data to and receive data from a wireless data transmission and reception device or system; said device or system may be at a control center, from which the assembly is controlled, with the aim of transmitting instructions and data when this transmission cannot be carried out through a submarine line, for example, when the submarine line is not connected (temporarily) to the installation or to the submersible device, or when the submarine line is not configured to transmit data, or when there is a failure that prevents the transmission of data through the submarine line.

In some embodiments, the submersible vehicle comprises a wireless data transmission and reception system. The wireless data transmission and reception system is configured to transmit data to and receive data from a wireless data transmission and reception device or system; said device or system may be at a control center with the aim of transmitting instructions and data when this transmission cannot be carried out through a submarine line, for example, when the submersible vehicle and the submersible device are not connected, or when the submarine line is not connected (temporarily) to the installation or to the submersible device, or when the submarine line is not configured to transmit data, or when there is a failure that prevents the transmission of data through the submarine line.

In some embodiments, the wireless data transmission and reception system of the submersible device comprises a communications processor. In some embodiments, the wireless data transmission and reception system of the submersible vehicle comprises a communications processor. In some of these embodiments, the submersible vehicle is further configured to energize the communications processor with energy received from the submersible device. In some of these embodiments and in other embodiments, the submersible vehicle is further configured to energize the communications processor with energy of at least one battery.

In some embodiments, the wireless data transmission and reception system comprises an antenna connected to the submersible vehicle or to the submersible device and installed on a floating buoy. The floating buoy allows the antenna to float on the sea surface, such that the wireless data transmission and reception system allows data transmission through radio frequency.

In some embodiments, the submersible connection line from the submersible device to the submersible vehicle comprises at least one of: a conduit for transporting energy, a conduit for transmitting a liquid material, and a line for transmitting data.

In some embodiments, the submarine line comprises at least one conduit for transmitting a liquid material.

In addition to including one or more conduits or conductors for transporting energy (for example, electrical energy, hydraulic energy, pneumatic energy), the submarine line includes a conduit or a plurality of additional conduits to transmit or transport liquid materials such as, for example, lubricant oil, coolant, fuel, liquefied gas, liquefied concrete (prior to the setting thereof, and transported together with compressed air which facilitates the movement thereof through the conduit), sand (in a mixture of sand and water that allows for movement through the conduit), etc.

In some embodiments, the submersible vehicle further comprises means for digging a trench. In some embodiments, the submersible vehicle is further configured to energize the means for digging a trench with energy received from the submersible device. In some of these embodiments and in other embodiments, the submersible vehicle is further configured to energize the means for digging a trench with energy of at least one battery.

The assembly may install a submarine line in a trench in the sea floor that the assembly itself digs by means of the submersible vehicle.

In some embodiments, the means for digging a trench comprise at least one jet trencher.

A jet trencher makes it possible to dig a trench by using hydraulic energy.

In some embodiments, the submersible vehicle further comprises means for handling at least one of: the submarine line to be installed, a line accessory, a line connector, and an obstacle on the sea floor. In some embodiments, the submersible vehicle is further configured to energize the means for handling with energy received from the submersible device. In some of these embodiments and in other embodiments, the submersible vehicle is further configured to energize the means of handling with energy of at least one battery.

The means for handling make it possible to move obstacles that may hinder the passage to the assembly and/or the submersible vehicle while it moves, as well as move and orient the submarine line, or a connector, or an accessory thereof.

In some embodiments, the chassis is adapted to receive and attach the submersible device; and the submersible device is adapted to be attached to the chassis in a removable manner.

The chassis makes it possible to load and unload different submersible devices, which are attached in a removable manner.

In one example, since the total length of the submarine lines for carrying out the cabling of an assembly of wind turbines may be several kilometers long, several coils of submarine lines in the offshore environment may be needed at one or several points in the wind farm, such that the assembly may install the line of each of these coils and thus interconnect the wind turbines. To this end, the submersible device comprises a submarine line to be installed; when the submersible vehicle receives and loads a submersible device, the submersible vehicle makes it possible to install the line retained in said device.

After installing a line (which in some cases includes connecting the line to other line(s) or installation(s)), the submersible vehicle may unload the submersible device and load another submersible device, thus making it possible for the assembly to install the submarine line provided in this other submersible device. This sequence may be repeated as many times as necessary to install all the submarine lines.

In some embodiments, the submersible vehicle and the submersible device are mechanically coupled in a non-removable manner.

Certain installations may be of submarine lines with a limited extension or length (for example, ten kilometers or less). An assembly that comprises the submersible vehicle and the submersible device, both coupled together in a non-removable way (in other words, non-detachable), is simpler, and therefore, more cost-effective, both at a manufacturing level as well as at an operational level.

In a second aspect of the invention, a method is presented to install a submarine line with an assembly, the assembly comprising a submersible vehicle and a submersible device, the method comprising:
transferring energy from an installation that comprises an energy source to the submersible device through the submarine line;
transferring energy from the submersible device to the submersible vehicle; and
laying the submarine line in an offshore environment with the assembly while energy is transferred to the submersible device through the submarine line and while energy is transferred to the submersible vehicle from the submersible device.

The method makes it possible to install a submarine line with an assembly that, during most or all of the operation for installing the submarine line, is energized through the same submarine line that it installs. With this method, the assembly may completely forego the presence of a vessel on the surface for controlling and energizing the assembly.

By connecting the submarine line to the submersible device and to an installation that comprises an energy source, the installation may provide electrical energy, therefore electrical power, hydraulic energy, therefore hydraulic power, or pneumatic energy, therefore pneumatic power, to the submersible device. By connecting the submersible vehicle to the submersible device, the latter may provide energy to the submersible vehicle, for example, a part of the energy that the submersible device has received from the installation.

With the energy that the submersible vehicle receives, this vehicle may energize means of movement that it comprises in order to move itself, and therefore move the submersible vehicle and therefore move the assembly formed by the submersible vehicle and the submersible device.

In some embodiments, laying the submarine line in an offshore environment with the assembly comprises laying the submarine line on a sea floor with the assembly. In some other embodiments, laying the submarine line in an offshore environment with the assembly comprises laying the submarine line in a trench in the sea floor with the assembly.

With the method of the present disclosure, it is possible to install the submarine line by laying it on the sea floor, in other words, on said floor or in a trench formed in the sea floor. In some embodiments, the assembly may dig a trench during the installation of the submarine line and introduce the line into the dug trench.

In some embodiments, the submersible device is arranged in a chassis of the submersible vehicle; and the submersible device comprises the submarine line.

The chassis of the submersible vehicle is adapted to receive and attach the submersible device, and the submersible device is adapted to be attached to the chassis in a removable manner. The submersible vehicle may load and unload submersible devices, which makes it possible for the assembly to install the submarine line of a submersible device loaded on the chassis of the submersible vehicle. Once this submarine line is installed, the submersible vehicle unloads the submersible device and loads another submersible device that comprises a different submarine line, the assembly and the submersible vehicle thus being able to install this other submarine line.

In some embodiments, the method further comprises: transforming, with a hydraulic unit of the submersible device, electrical energy into hydraulic energy; and transferring hydraulic energy to the submersible vehicle.

In some embodiments, each energy that is transferred to the submersible device through the submarine line and the energy transferred by the submersible device to the submersible vehicle is electrical energy or hydraulic energy, in other words, the forms of these energies are electrical or hydraulic.

In some embodiments, the method further comprises transforming, with a hydraulic unit of the submersible vehicle, electrical energy into hydraulic energy and/or hydraulic energy into electrical energy, at least part of the energy that the submersible vehicle receives from submersible device.

In some embodiments, each energy that is transferred to the submersible device through the submarine line and the energy transferred by the submersible device to the submersible vehicle is electrical energy and hydraulic energy, in other words, the forms of these energies are electrical and hydraulic. In these embodiments, the installation comprises two energy sources: one source of electrical energy and one source of hydraulic energy. The submersible device receives electrical energy as well as hydraulic energy from the installation (through the submarine line). In this sense, the step of transferring energy from the installation that comprises an energy source to the submersible device through the submarine line comprises the step of transferring electrical energy and hydraulic energy from the installation that comprises a first energy source and a second energy source to the submersible device through the submarine line. The submersible device, in turn, transfers electrical energy as well as hydraulic energy to the submersible vehicle.

In some embodiments, the method further comprises adapting, with means for adapting energy of the submersible device, energy transferred from the installation to the submersible device through the submarine line. These means for adapting energy may be, for example, an electrical voltage transformer, a hydraulic or pneumatic pressure regulator, or a hydraulic or pneumatic flow regulator. These means modify one of: the electrical voltage, the hydraulic or pneumatic pressure, and the hydraulic or pneumatic flow. In some of these embodiments, the energy transferred from the submersible device to the submersible vehicle is the energy adapted with the means for adapting energy of the submersible device.

In some embodiments, the method further comprises transmitting data from the installation to the submersible device and/or from the submersible device to the installation through the submarine line.

In some embodiments, the method further comprises transmitting data from the installation to the submersible device and/or submersible device, and transmitting data from the submersible device and/or submersible vehicle to the installation. In some of these embodiments, the steps to transmit data from the installation to the submersible device and/or submersible vehicle, and to transmit data from the submersible device and/or submersible vehicle to the installation, are carried out through a wireless data transmission and reception system; and the submersible device and/or submersible vehicle comprise a wireless data transmission and reception system.

The data transmission and reception system may be in the form of, for example, an antenna connected to the submersible vehicle or submersible device and installed on a floating buoy, the antenna remaining on the sea surface.

In some embodiments, the method further comprises transmitting data from the submersible device to the submersible vehicle and/or from the submersible vehicle to the submersible device wirelessly or through a submersible connection line from the submersible device to the submersible vehicle.

In some embodiments, the submersible connection line from the submersible device to the submersible vehicle comprise at least one of: a conduit for transporting energy, a conduit for transmitting a liquid material, and a line for transmitting data.

In some embodiments, the submarine line comprises at least one conduit for transmitting a liquid material.

In some embodiments, the submersible vehicle and the submersible device are mechanically coupled in a non-removable manner.

Certain installations may be submarine lines with a limited extension or length (for example, ten kilometers or less). An assembly that comprises the submersible vehicle and the submersible device, both coupled together in a non-removable way (in other words, non-detachable), is simpler, and therefore, more cost-effective, both at a manufacturing level as well as at an operational level.

Advantages similar to those described for the first aspect of the invention may also be valid to the second aspect of the invention.

A third aspect of the invention presents a system comprising:
an installation that comprises at least one energy source; and
an assembly for installing a submarine line according to the first aspect of the invention.

In some embodiments, the energy source is one of: a source of electrical energy, a source of hydraulic energy, and a source of pneumatic energy.

In some embodiments, the installation comprises a source of electrical energy and a source of hydraulic energy.

Advantages similar to those described for the first aspect of the invention may also be valid to the third aspect of the invention.

### BRIEF DESCRIPTION OF THE DRAWINGS

As a complement to the description, and for the purpose of helping to make the characteristics of the invention more readily understandable, in accordance with various practical embodiments thereof, said description is accompanied by a set of figures constituting an integral part thereof, which by way of illustration and not limitation represent the following:
Figure 1 shows an offshore wind farm.
Figure 2 shows a submersible vehicle of an assembly for installing a submarine line according to an embodiment of the invention.
Figure 3 shows a submersible device of an assembly for installing a submarine line according to an embodiment of the invention.
Figures 4 and 5 show assemblies for installing a submarine line according to embodiments of the invention.
Figures 6A to 6D show an attaching sequence of a submersible device to a submersible vehicle to form an assembly for installing a line.
Figure 7 shows vessels transporting submersible devices and an assembly for installing a submarine line.
Figure 8 shows an installation of a submarine line with an assembly according to an embodiment of the invention.
Figure 9 shows a transverse cross section of a submarine line that can be installed with an assembly according to an embodiment of the invention.
Figures 10 to 12 show, with block diagrams, systems with assemblies for installing a submarine line according to embodiments of the invention.
Figure 13 shows an assembly for installing a submarine line according to an embodiment of the invention.

### DESCRIPTION OF EMBODIMENTS OF THE INVENTION

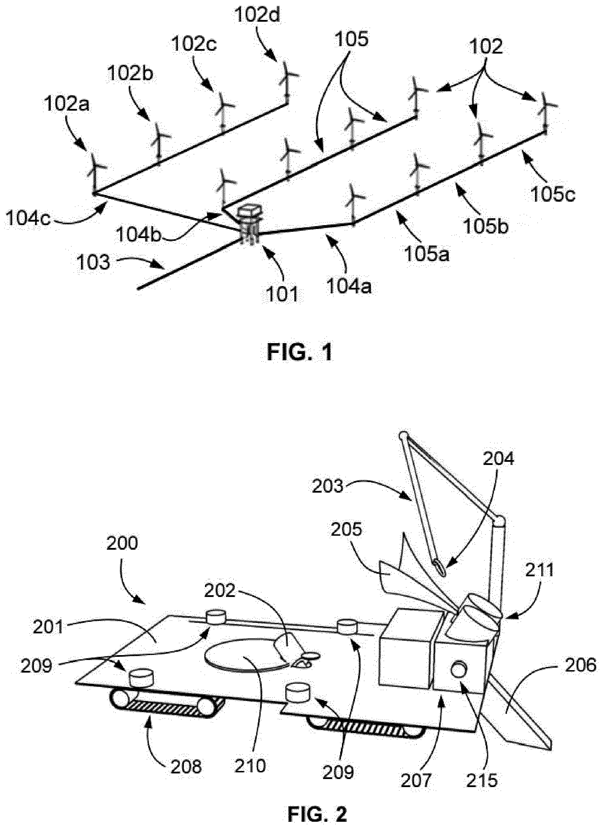

Figure 1 shows an offshore wind farm. A substation 101 receives electrical power from each wind turbine 102 of the wind farm through lines 104a-104c (which connect the substation 101 to the first wind turbine of each string) and 105 (which connect two consecutive wind turbines 102 of the same string). The substation 101 transfers the combined electrical power to an installation on land, for example, through the evacuation line 103; in other words, the evacuation line(s) 103 interconnect the substation 101 to the electrical grid, which can be onshore. The lines 103, 104a-104c and 105 may be laid on the sea floor or introduced into trenches thereof.

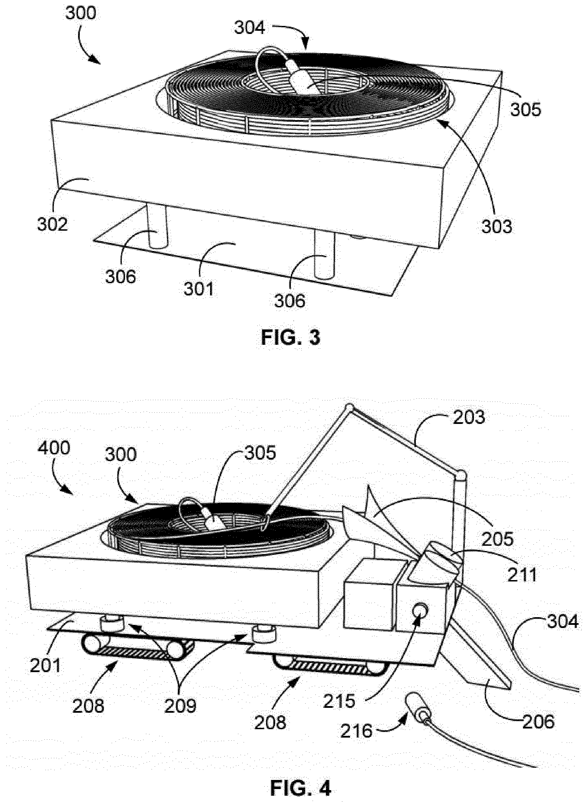

Figure 2 shows a submersible vehicle 200 for laying a line on the sea floor or a trench thereof according to an embodiment of the invention. The submersible vehicle 200 comprises a chassis 201, at least one connector 202, means 203 for handling the line, and/or line accessories, and/or line connectors, and/or obstacles on the sea floor (for example, rocks or plants), channeling means of the line 205, means 206 for digging a trench (for example, a dredge, a V-shaped plowing device, a waterjet cutting tool as a jet trencher, and other tools commonly used in the field of installing submarine lines), one or more watertight compartments 207, means of movement 208, a plurality of hydraulic cylinders 209, a support 210 for a drum of a submersible device (such as the one shown in Figure 3) and means for controlling tension 211 of the submarine line to be installed. In some embodiments, the submersible vehicle 200 further comprises a wireless data transmission and reception system.

The submersible vehicle 200 is configured to receive energy from a submersible device through at least one connector 202 and to use the energy received to power, for example, one or several of: the means of movement 208, the means 203 for handling, the means 206 for digging a trench, the plurality of hydraulic cylinders 209, the wireless data transmission and reception system, etc.

The chassis 201 of the submersible vehicle 200 is adapted to receive and attach a submersible device (for example, that of Figure 3). In this sense, the submersible device can be loaded on the chassis 201 and then be attached. The plurality of hydraulic cylinders 209 may raise the submersible device when it is, for example, on the sea floor, and subsequently load and secure it on the chassis 201.

The means 203 for handling the line comprise a moveable arm. In some embodiments, the moveable arm is extendable. Said moveable arm comprises a first end attached to the structure of the submersible vehicle 200 (for example, to the chassis 201), and a second end that includes a tool for handling the line, for example, the ring-shaped tool 204.

The means of movement 208 include a plurality of track chains that provide a grip to irregular surfaces, such as the sea floor, thus allowing for the movement of the submersible vehicle 200 and, therefore, the movement of an assembly that comprises the submersible vehicle 200.

In some embodiments that are not shown, the submersible vehicle 200 includes additional means of movement, such as means of propulsion to move underwater (for example, in the water column) or on the surface of water.

The submersible vehicle 200 may also include flotation means (not shown) known in the state of the art and whose buoyancy is adjustable. Therefore, the flotation means makes it possible to increase/reduce the depth of the submersible vehicle 200 to reach the sea floor or the sea surface. The flotation means may be included in watertight compartments 207, which may further house at least one battery, for example. The submersible vehicle 200 further comprises means for modifying the buoyancy of the flotation means; for example, the buoyancy can be modified after receiving instructions through a cable connected to the submersible device or through the wireless data transmission and reception system.

Figure 3 shows a submersible device 300 according to an embodiment of the invention. The submersible device 300 comprises a support platform 301, a buoyancy tank 302 that includes flotation means, a drum 303 that comprises a submarine line 304 to be installed (which is coiled in the drum 303), a plurality of feet 306, a first connector and a second connector (not shown). In some embodiments, the submersible device 300 further comprises a wireless data transmission and reception system.

The support platform 301 prevents the submersible device 300 from sinking into the sea floor when said floor is soft, and it further facilitates the loading of the submersible device 300 on a submersible vehicle (such as the submersible vehicle 200 of Figure 2). The support platform 301 may be disconnected from the buoyancy tank 302 when it is loaded on the chassis 201 of the submersible vehicle 200.

With regard to the submersible vehicle 200 of Figure 2, before the submersible device 300 is loaded on the submersible vehicle 200, the submarine line 304 is coiled in the drum 303. In some cases, a first end (not shown) of the submarine line 304 connects to an energy source of an installation, for example, an installation such as a substation of a wind farm in a sea environment (for example, the substation 101) before loading the submarine line 304 in the drum 303; in other cases, the submarine line 304 is loaded in the drum 303 before making said connection. Likewise, in some cases, the connection to the energy source is made once the submersible device 300 is loaded to the submersible vehicle 200; in some other cases, the connection to the installation is made before loading the submersible device 300 on the submersible vehicle 200.

A second end of the line 304 connects to the first connector of the submersible device 300, for which the second end of the line 304 is provided with a plug or connector 305. When the first end of the submarine line 304 connects to the installation and the second end of the submarine line 304 connects to the first connector of the submersible device 300, the submarine line 304 transfers energy from the installation to the submersible device 300. The installation comprises an energy source that may provide electrical energy, therefore electrical power, hydraulic energy, therefore hydraulic power, or pneumatic energy, therefore pneumatic power. The connection of the second end of the line 304 to the submersible device 300 is preferably made after loading said device 300 on the submersible vehicle 200, but it may also be made before it has been loaded on the submersible vehicle 200.

The submersible device 300 further comprises means for modifying the buoyancy of the buoyancy tank 302; for example, the buoyancy may be modified after receiving instructions through the submarine line 304 connected to the submersible device 300, or through the wireless data transmission and reception system (in which case the instructions come from the submersible vehicle 200).

The submersible device 300 may further house at least one battery in one of the watertight compartments of the buoyancy tank 302, for example, to provide energy to the electronics of the submersible device 300 at times when it does not receive energy from an installation through the submarine line 304.

Figure 4 shows an assembly 400 for installing a submarine line 304 on a sea floor, or in a trench in the sea floor, according to an embodiment of the invention. The assembly 400 may make the connection of the laid submarine line to installations that include an energy source (for example, wind turbines, wave energy converters, substations, etc.) and/or fixed platforms, thus being able to interconnect different installations and/or platforms.

The assembly 400 comprises a submersible vehicle 200 and a submersible device 300 loaded on the chassis 201 of the submersible vehicle 200. The submersible device 300 is disconnected from the support platform 301 thereof while it is loaded on the submersible vehicle 200. When the submersible vehicle 200 is not provided with means 206 for digging a trench or if said means 206 are not used in the installation of the submarine line 304, the assembly 400 may lay the submarine line 304 directly on the sea floor without digging any trenches, or in a trench if it has already been formed beforehand.

The means 203 for handling the line uncoil the line 304 retained in the drum 303 of the submersible device 300 and orient the line 304 towards the channeling means of the line 205; the channeling means of the line 205, in turn, orient the line 304 towards the means for controlling tension 211, after which the line 304 is introduced into the trench or is laid on the sea floor.

In other embodiments that are not shown, the submarine line does not need to be uncoiled by the means 203 for handling in order to install the submarine line. For example, the drum 303 may be rotary, such that when it rotates in the direction opposite to the direction in which the line has been coiled inside this drum 303, it causes the line 304 to uncoil without the help of the means 203 of handling. In this case, it is necessary that the rotation of said drum 303 is synchronized with the means for controlling tension 211.

While the plug or connector 305 of the line 304 is connected to the first connector of the submersible device 300, the line 304 may provide electrical power, hydraulic power or pneumatic power to the assembly 400 while the other end of the line is connected to an installation with the corresponding energy source. Likewise, the submarine line 304 may also transmit data and/or receive data from the submersible device 300, since in several embodiments said submarine line 304 includes optical fibers for transmitting and receiving data.

The submersible device 300 transfers energy to the submersible vehicle 200 when they are connected together, for example, with connection of the second connector of the submersible device 300 and at least one connector 202 of the submersible vehicle 200, with or without a submersible connection line from the submersible device to the submersible vehicle (in this second case, the connectors are connected directly to each other). Preferably, energy is transferred to the submersible vehicle 200 while the submersible device 300 receives energy through the submarine line 304 to be installed. In this regard, the submersible device 300 can transfer the energy of same type of energy or power that it receives through the submarine line 304 (for example, electrical, hydraulic or pneumatic energy/power is received and transferred), or of a type different from that received through the submarine line 304 (for example, electrical energy/power is received and hydraulic energy/power is transferred, or hydraulic energy/power is received and electrical energy/power is transferred, or electrical energy/power is received and pneumatic energy/power is transferred, etc.). In the first case, part of the energy/power received in the submersible device 300 is transferred to the submersible vehicle 200, while the other part is used in the submersible device itself 300 to power components thereof. In the second case, part of the energy/power received in the submersible device 300 is transformed into the other type of energy/power; with this transformed energy/power, one part is transferred to the submersible vehicle 200 and the other part is kept in the submersible device 300 (to power components thereof), or all of the energy/power is transferred to the submersible vehicle 200.

The submersible vehicle 200 of the assembly 400 can include an additional connector 215, which can be an outlet or a plug. The additional connector 215 is configured for connection of an underwater line to a wet-mate type underwater connector 216 (i.e. can be plugged in underwater), for example, to transfer and/or receive energy and/or data to/from another vehicle.

With regard to Figure 1, in one example, the assembly 400 installs a submarine line that constitutes the submarine lines 104a-104c; for this installation, the assembly 400 begins to lay the submarine line by starting from the position of the substation 101 and ending at the position of a wind turbine or a string that is farther from the substation 101. For example, in order to carry out the installation from the substation 101 to the last wind turbine 102d of a string, the submersible vehicle 200 loads a submersible device 300 close to the substation 101. The line 304 retained in the drum 303 of the submersible device 300, which has a first end connected to the substation 101 (with an energy source such as, for example, an auxiliary electrical grid or an electrical diesel generator) and the second end connected to the submersible device 300, allows for the transfer of energy between the substation 101 and the submersible device 300, and the latter transfers energy to the submersible vehicle 200 so that the assembly 400 carries out the installation of the submarine line 304. In this way, the assembly 400 lays the submarine line 304 from the substation 101 to the last wind turbine 102d, passing through other wind turbines 102a-102c of the same string, while it receives energy from the submersible device 300, which, in turn, receives energy from the substation 101.

In another example, if the first wind turbine 102a is already connected to the substation 101 through a cable 104c, the assembly 400 can install the submarine line 304 to complete the cabling of the string; the assembly 400 lays the submarine line 304 from the first wind turbine 102a to the last wind turbine 102d. In this example, one end of the submarine line 304 can be connected to the first wind turbine 102a instead of to the substation 102a if said first wind turbine 102a is capable of supplying energy to the assembly 400, which is possible due to the fact that the first wind turbine 102a was already connected to the substation 101 beforehand.

In both cases, the assembly 400 can receive power provided by the substation 101 or to a wind turbine 102 (which has electrical, hydraulic or pneumatic power when it connects to the substation 101) in order to carry out most tasks for laying the submarine line. The assembly may minimize the use of the at least one battery 207 and only use energy stored in the at least one battery 207 at the times when they are not laying a line (for example, while it is returning to the substation 101, when the submersible device 300 is being dismounted and/or when a new submersible device 300 is being mounted, etc.). Furthermore, while a submarine line 304 is installed, part of the energy that the submersible vehicle 200 (of the submersible device 300) receives can be used to recharge the at least one battery 207. Likewise, part of the energy that the submersible device 300 receives can be used to recharge the at least one battery contained in the buoyancy tank 303 of the submersible device 300.

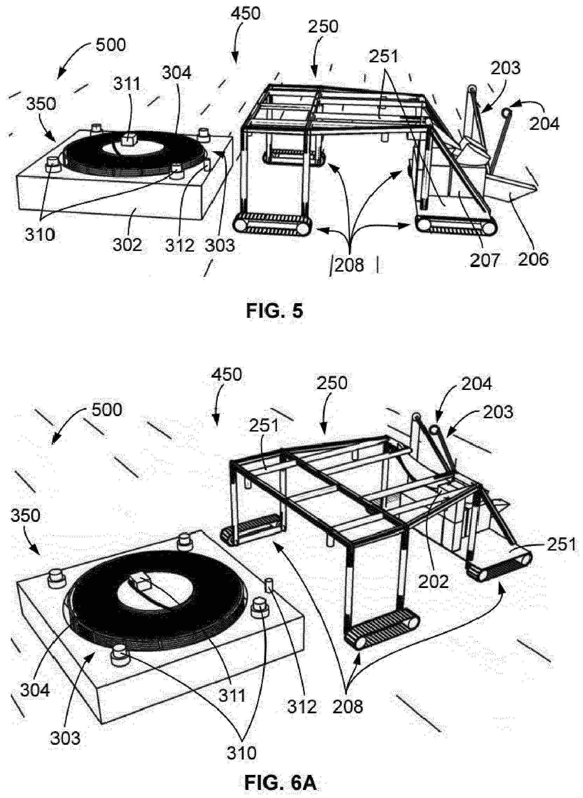

Figure 5 shows an assembly 450 for installing a submarine line 304 on a sea floor 500, or in a trench in the sea floor 500, according to an embodiment of the invention. The assembly 450 comprises a submersible vehicle 250 and a submersible device 350, shown in Figure 5 where it still has not been attached to the submersible vehicle 250.

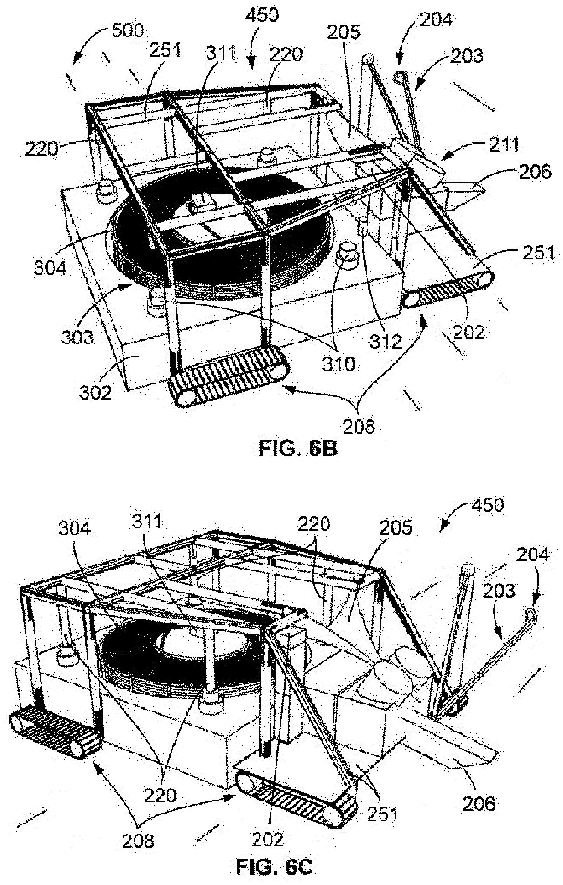

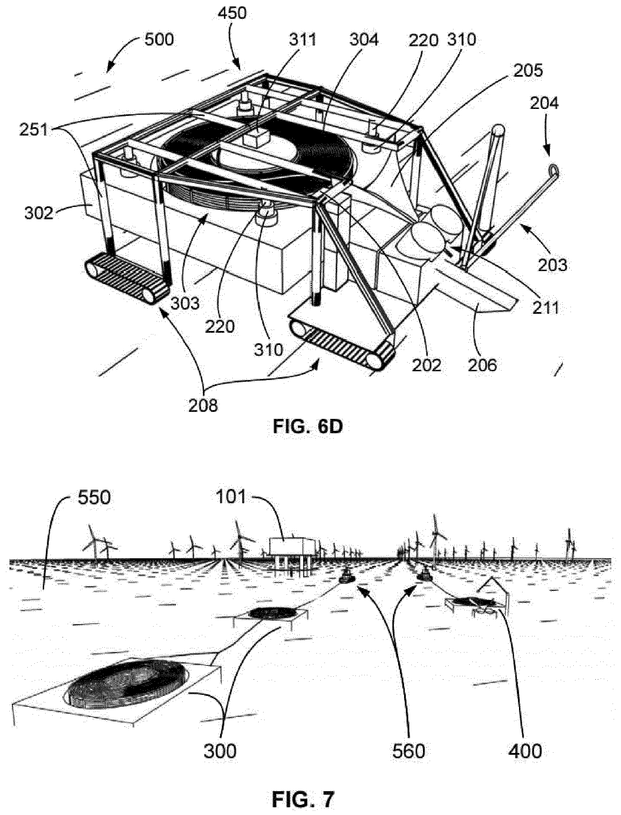

The submersible vehicle 250 comprises a chassis 251 (different from the chassis 201 of the submersible 200 of Figure 2). The chassis 251 makes it possible to attach the submersible device 350 from above, the latter being suspended from the chassis 251 when the assembly 450 installs the submarine line 304 (as can be observed in Figure 6D). The submersible vehicle 250 further comprises at least one connector 202, means 203 for handling the line, and/or line accessories, and/or line connectors, and/or obstacles on the sea floor, channeling means of the line 205, means 206 for digging a trench, watertight compartments 207, means of movement 208, a plurality of hydraulic cylinders 220 (shown in Figures 6B-6D), and means for controlling tension 211 for the line to be installed. In some embodiments, the submersible vehicle 250 further comprises a wireless data transmission and reception system.

The submersible device 350 comprises a buoyancy tank 302 that includes flotation means that make it possible to regulate the apparent weight of the assembly 450 under water as the line is being installed in the sea bottom, and therefore reduces the weight borne by the submersible device 350. Furthermore, the buoyancy of the submersible device 350 may be such that it can be transported by floating on the sea surface. The submersible device 350 further comprises a drum 303 that comprises a submarine line 304 to be installed that is coiled in the drum 303, means 310 for being attached to the submersible vehicle 250, a first connector 311 wherein the second end of the line 304 (the first end of the line 304, which is not shown in this representation, connects, for example, to a sea substation), a second connector 312 for transmitting energy between the submersible device 350 and the submersible vehicle 250 are connected through the correlating connector 202 installed in the submersible device 250, and in some embodiments, it further comprises a wireless data transmission and reception system.

Figures 6A to 6D show an attaching sequence of the submersible device 350 to the submersible vehicle 250 to form the assembly 450 for installing a submarine line 304.

In Figure 6A, the submersible device 350 rests on a sea floor 500 before being attached by the submersible vehicle 250. The submersible device 350 can be close to an installation with an energy source that may provide energy to the assembly 450. A first end of the submarine line 304 to be installed is connected or subsequently connects to an installation that may provide energy, and a second end of the line 304 is connected or connects to the first connector 311.

In Figure 6B, the submersible vehicle 250 uses the means of movement 208 to move on the sea floor 500 and position itself on the submersible device 350. The submersible vehicle 250 uses the electrical energy stored in the at least one battery 207 to function during the attaching operation of the submersible device 350. In some cases, the submersible vehicle 250 uses electrical energy to power the components thereof. In other cases, the submersible vehicle 250 may comprise a hydraulic unit to transform at least part of the electrical energy from the at least one battery 207 into hydraulic energy to power some of the components thereof, while the other component(s) is/are powered with electrical energy.

In Figure 6C, the submersible vehicle 250 is positioned on the submersible device 350 and extends the plurality of hydraulic cylinders 220 that attach to the means 310 of the submersible device 350 to be attached.

In Figure 6D, the submersible vehicle 250 retracts the plurality of hydraulic cylinders 220 to raise the submersible device 350 and attach it to the chassis 251. Once raised, the connector 202 of the submersible vehicle 250 connects to the second connector 312 of the submersible device 350, thus allowing for the transfer of energy and/or data and/or liquid products (such as lubricant oils, coolants, etc.) between the submersible device 350 and the submersible vehicle 250. In some embodiments, this connection is made by means of a submersible connection line from the submersible device to the submersible vehicle, such that the energy and/or data and/or other products is/are transferred through said submersible line; the submersible line connects to the connector 202 of the submersible vehicle 250 and to the second connector 312 of the submersible device 350. In this case, these connectors 202 and 312 are multi-connector type connectors known in the state of the art; in other words, they group different connection terminals in the same connector body, these terminals being specific for each fluid, electricity or data that must be transferred.

Figure 7 schematically shows vessels 560 towing an assembly 400 and submersible devices of the line 300.

The vessels 560 tow (with towing means known in the state of the art) one or more assemblies 400, 450, submersible devices 300, 350, and/or submersible vehicles 200, 250 from a port to, for example, a substation 101 of a wind farm in a sea environment 550, such as a sea or an ocean. Preferably, the towed devices, vehicles and/or assemblies comprise flotation means. Each submersible device 300 can comprise a submarine line coiled in its respective drum (as shown) before being dragged, thus facilitating the subsequent task of installing the submarine lines.

In some cases, the assemblies 400, 450, submersible devices 300, 350, and/or submersible vehicles can drag other assemblies, submersible devices and/or submersible vehicles.

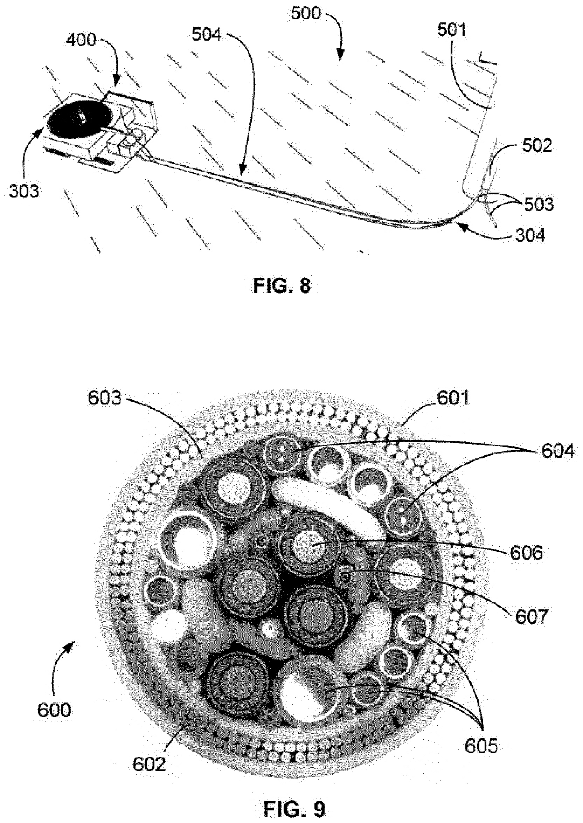

Figure 8 shows the installation of a submarine line 304 with the assembly 400. The submersible vehicle of the assembly 400 loads a submersible device, preferably near an installation 501 (for example, substation, wind turbine, wave energy converters, etc.) that is partially under water (in other words, one part thereof is below the sea surface and the other part is above the sea surface). The submersible device comprises the submarine line 304 that includes a first end connected to the installation 501 (to an energy source thereof). In this regard, the first end of the line 304 is passed through a J-shaped tube 503 (inside of an I-shaped tube 502) with the help of a messenger cable (not shown). Thus, when the submersible device is loaded on the submersible vehicle, a portion of the line 304 is already uncoiled and introduced into the J-shaped tube 503 so that it can connect to the energy source of the installation 501 (generally in the part above the sea surface); the remaining portion of the submarine line 304 is retained in the drum of the submersible device, which can remain on the sea floor 500 until the submersible vehicle loads it on the chassis thereof. The assembly 400 can subsequently install the line 304.

The installation 501 energizes the assembly 400 through the submarine line 304. The assembly 400 digs a trench 504 in the sea floor 500 and introduces the line 304 into the trench 504 while the assembly 400 moves forward. The means for handling the line uncoil the line 304 from the drum and orient the line 304 towards the channeling means of the line to introduce it into the trench 504 through the means for controlling tension. The same installed line 304 may be used to transmit (from the installation 501) data and instructions for operating the assembly 400, as well as to transmit data from the assembly 400 (to the installation 501) to carry out any of these tasks.

Figure 9 shows a cross section of a submarine line 600 (which could be the submarine line 304 of Figures 3-5, 6A-6D, 8) which can be installed by an assembly according to the present disclosure.

The submarine line 600 comprises a first layer or coating 601, a protective layer 602 which comprises metal threads or cables, and a second layer or coating 603. The submarine line 600 further comprises a plurality of auxiliary electrical lines or cables 604 that can transport a small amount of low-voltage electrical energy to power electronic and communication elements in the assembly 400 and 450, independent of the main energy source, a plurality of conduits or lines 604 to transport liquid materials, a plurality of high-voltage electrical lines or cables 606 to transmit electrical power and a plurality of optical fibers 607 to transmit data. The submarine line 600 further comprises layers and/or insulating elements.

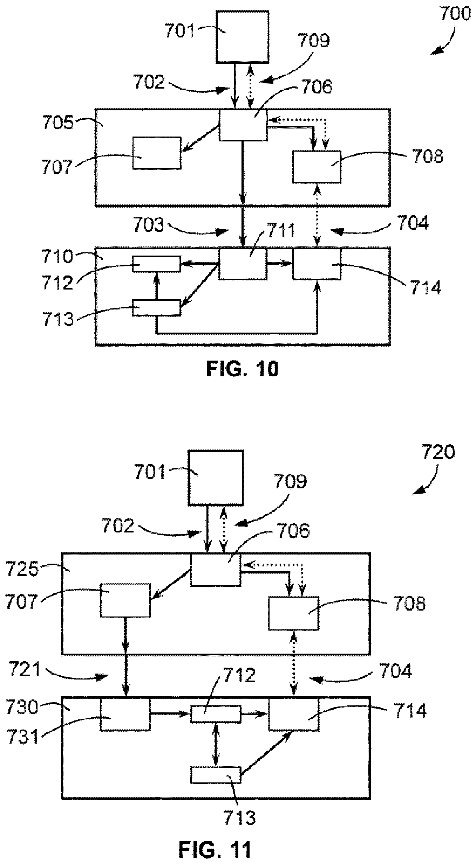

Figure 10 shows a system 700 that includes an installation 701 (for example, a substation of an offshore wind farm) that provides first electrical energy 702 to an assembly for installing a submarine line. The assembly is formed by a submersible device 705 and a submersible vehicle 710.

The submersible device 705 includes the submarine line to be installed through which it receives the first electrical energy 702 of the installation 701. It also includes a first distributor 706, a first hydraulic unit 707 and at least a first processor 708 that may have a battery for the operation thereof, independent of the energy supplied through the line. The first distributor 706 provides part of the electrical energy received 702 through the submarine line to the first hydraulic unit 707, which transforms it into hydraulic energy for the use of the submersible device 705. The first distributor 706 also provides electrical energy to the first processor 708, as well as data (shown as a dotted line only for illustrative reasons) in the case that the installation 701 can also transmit data 709 through the submarine line (the installation 701 can also receive data 709 from the assembly through the line). The first distributor 706 transfers second electrical energy 703 to the submersible vehicle 710 through a first connection (for example, connection between the submersible device 705 and the submersible vehicle 710 by means of the connectors thereof, or by means of a submersible line, etc.).

The submersible vehicle 710 includes a second distributor 711, a second hydraulic unit 712, at least one battery 713 and at least one second processor 714. The second distributor 711 receives the second electrical energy 703 through the first connection when the submersible device 705 is connected to the installation 701 by means of the submarine line and receives energy through it. The energy received 703 in the second distributor 711 is distributed between the second hydraulic unit 712 (to transform electrical energy into hydraulic energy and thus power, for example, the means of movement of the submersible vehicle 710, not shown), the at least one battery 713 (to recharge it if necessary) and the second processor 714 (so that it can operate). It may also distribute said electrical energy to other components of the submersible vehicle 710. Likewise, the at least one battery 713 may also supply electrical energy to the second processor 714 and to the second hydraulic unit 712 (in some embodiments, also to other components of the submersible vehicle 710), for example, during those times when the submersible vehicle 710 is not receiving the second electrical energy 703.

Through the first connection or a second connection (for example, with the connection by means of the connectors, with the submersible line, with a wireless data transmission and reception system, etc.), the first processor 708 communicates with the second processor 714 to carry out data transmission and reception 704 (represented with a dotted line only to illustrate that it is data transmission).

Figure 11 shows a system 720 that includes the installation 701 that provides the first electrical energy 702 to an assembly for installing a submarine line. The assembly is formed by a submersible device 725 and a submersible vehicle 730.

The submersible device 725 includes the submarine line to be installed through which the submersible device 725 receives the first electrical energy 702 of the installation 701. It also includes the first distributor 706, the first hydraulic unit 707 and the first processor 708 that can have a battery for the operation thereof, independent of the energy provided by the line. The first distributor 706 provides at least part of the electrical energy 702 received through the submarine line to the first hydraulic unit 707, which transforms it into hydraulic energy for the use of the submersible device 725 and for transferring first hydraulic energy 721 to the submersible vehicle 730 through a first connection (for example, connection between the submersible device 725 and the submersible vehicle 730 by means of the connectors thereof, or by means of a submersible line, etc.). The first distributor 706 further provides electrical energy to the first processor 708, as well as data 709 in the case that the installation 701 further transmits data through the submarine line (the installation 701 may also receive data 709 from the assembly through the line).

The submersible vehicle 730 includes a second distributor 731, the second hydraulic unit 712, the battery 713 and the second processor 714. The second distributor 731 receives the first hydraulic energy 721 when the submersible device 725 is connected to the installation 701 by means of the submarine line and receives energy through it. Part of the energy received 721 in the second distributor 731 is used to energize the submersible vehicle 730, and at least another part of the energy received 721 is provided to the second hydraulic unit 712 (to transform hydraulic energy into electrical energy). The second hydraulic unit 712 transfers electrical energy to the battery 713 (to recharge it if necessary), to the second processor 714 (so that it can operate), and in some embodiments, to other components comprised in the submersible vehicle 730. Likewise, the battery 713 may further supply electrical energy to the second processor 714 and to the second hydraulic unit 712 to transform it into hydraulic energy that it may energize the submersible vehicle 730 (in some embodiments, the battery also supplies electrical energy to other components of the submersible vehicle 730), for example, when the submersible vehicle 730 is not receiving the first hydraulic energy 721.

The first processor 708 communicates with the second processor 714 to carry out data transmission and reception 704.

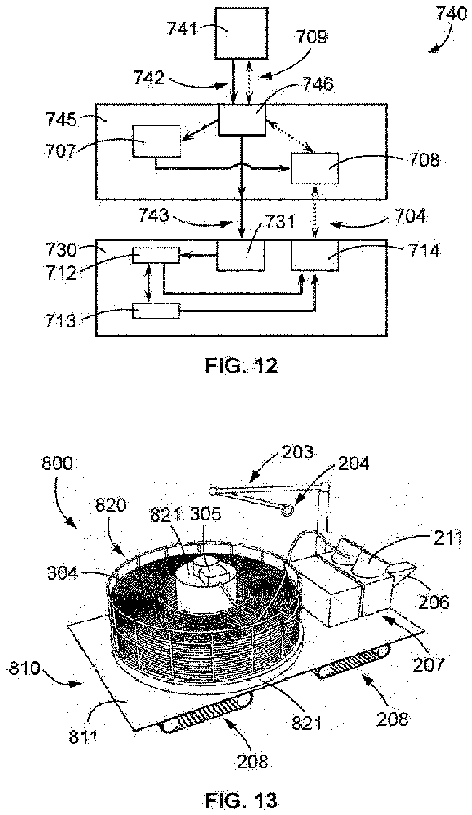

Figure 12 shows a system 740 that includes an installation 741 that provides first hydraulic energy 742 to an assembly for installing a submarine line. The assembly is formed by a submersible device 745 and the submersible vehicle 730.

The submersible device 745 includes the submarine line to be installed through which the submersible device 745 receives the first hydraulic energy 742 of the installation 741. It further includes a first distributor 746, the first hydraulic unit 707 and the first processor 708 that can have a battery for the operation thereof, independent of the energy received 742 by the line. The first distributor 746 provides at least part of the hydraulic energy received 742 through the submarine line to the first hydraulic unit 707, which transforms it into electrical energy for the use of the submersible device 745 (for example, for powering the first processor 708). The first distributor 746 transfers part of the first hydraulic electrical energy 742 to the submersible vehicle 730 through a first connection (for example, connection between the submersible device 745 and the submersible vehicle 730 by means of the connectors thereof, or by means of a submersible line, etc.). The first distributor 746 also transmits data to the first processor 708, in the case that the installation 741 also transmits data 709 through the submarine line (the installation 741 can also receive data 709 of the assembly through the line).

The submersible vehicle 730 includes the second distributor 731, the second hydraulic unit 712, the battery 713 and the second processor 714. The second distributor 731 receives second hydraulic energy 743 when the submersible device 745 is connected to the installation 741 by means of the submarine line and receives energy through it. Part of the energy received 743 in the second distributor 731 is used to energize the submersible vehicle 730, and at least another part of the energy received 743 is provided to the second hydraulic unit 712 (to transform hydraulic energy into electrical energy). The second hydraulic unit 712 transfers electrical energy to the battery 713 (to recharge it if necessary), to the second processor 714 (so that it can operate), and in some embodiments, to other components comprised in the submersible vehicle 730. Likewise, the battery 713 may further supply electrical energy to the second processor 714 and to the second hydraulic unit 712 to transform it into hydraulic energy that may energize the submersible vehicle 730 (in some embodiments, the battery further supplies electrical energy to other components of the submersible vehicle 730), for example, when the submersible vehicle 730 is not receiving the second hydraulic energy 743.

The first processor 708 communicates with the second processor 714 to carry out data transmission and reception 704.

In some embodiments, the end of the submarine line that connects to the submersible devices 705, 725, 745 is stripped to extract several lines or cables (particularly, one of the ends thereof) present inside the submarine line. Some of these lines or cables connect to submersible devices 705, 725, 745, each one to a different connector (for example, a multi-connector type connector known in the state of the art). In this way, the distributors 706, 746 may only distribute the energy received since the optical fibers for transmitting data may be connected to a different connector coupled to a processor and/or other digital devices in a communicated way.

Figure 13 shows an assembly 800 for installing a submarine line 304 on a sea floor or in a trench in the sea floor, according to an embodiment of the invention. The assembly 800 may make the connection of the laid submarine line to installations that include an energy source (for example, wind turbines, wave energy converters, substations, etc.) and/or fixed platforms, thus being able to interconnect different installations and/or platforms.

The assembly 800 comprises a submersible vehicle 810 and a submersible device 820 mechanically coupled in a non-removable manner. The submersible device 810 comprises a chassis 811 to which the submersible device 820 is mechanically coupled, particularly a drum 821 that the submersible device 820 comprises and in which the submarine line 304 is coiled. Likewise, electronic components (for example, a processor, a wireless data transmission and reception system, etc.), means for adapting energy or a hydraulic unit may also be included in the drum 821.

The assembly 800 is more cost-effective at a manufacturing level as well as at an operational level. Although it is not limited to these installations, the assembly 800 is particularly suitable for installations of submarine lines with a limited extension or length (for example, ten kilometers or less).

Although the terms "submersible device" and "submersible vehicle" have been used in this text to refer to elements that comprise an assembly for installing a submarine line, it is also possible to call these elements, for example, "first submersible apparatus" and "second submersible apparatus", or "first submersible device" and "second submersible device".

In this text, the word "comprises" and its variants (such as "comprising", etc.) should not be understood in an exclusive sense, i.e. they do not exclude the possibility of that which is described including other elements, steps, etc.

Also, the invention is not limited to the specific embodiments described herein, but rather encompasses the variations that one skilled in the art could make (e.g. in terms of choice of materials, dimensions, components, design, etc.), within the scope of what may be deduced from the claims.

## Claims

1. An assembly (400, 450) for installing a submarine line (304, 600) comprising:
a submersible vehicle (200, 250, 710, 730) comprising a chassis (201, 251) and means of movement (208); and
a submersible device (300, 350, 705, 725, 745) comprising the submarine line (304, 600) in which the submersible device (300, 350, 705, 725, 745) is configured to be connected to the submarine line (304, 600) and to be connected to the submersible vehicle (200, 250, 710, 730);
wherein the submersible vehicle (200, 250, 710, 730) is configured to be connected to the submersible device (300, 350, 705, 725, 745);
wherein the submersible device (300, 350, 705, 725, 745) is configured to receive energy through the submarine line (304, 600) and to transfer energy to the submersible vehicle (200, 250, 710, 730) when the submarine line (304, 600) is connected to an installation (101,501, 701, 741) that comprises an energy source; and
wherein the assembly (400, 450) is configured to install the submarine line (304, 600) while the submersible device (300, 350, 705, 725, 745) receives energy (702, 742) through the submarine line (304, 600) and transfers energy (703, 721, 743) to the submersible vehicle (200, 250, 710, 730).

2. The assembly (400, 450) of claim 1, wherein:
the submersible vehicle (200, 250, 710, 730) further comprises a connector (202) to connect to the submersible device (300, 350, 705, 725, 745); and
the submersible device (300, 350, 705, 725, 745) further comprises a first connector (311) to connect to the submarine line (304, 600) and a second connector (312) to connect to the submersible vehicle (200, 250, 710, 730).

3. The assembly (400, 450) of one of the preceding claims, wherein:
the submersible device (300, 350, 705, 725, 745) further comprises a hydraulic unit (707) to transform electrical energy into hydraulic energy;
the energy (703, 721, 743) that the submersible device (300, 350, 705, 725, 745) transfers to the submersible vehicle (200, 250, 710, 730) is hydraulic energy (721, 743); and
the energy (702, 742) that the submersible device (300, 350, 705, 725, 745) receives through the submarine line (304, 600) is electrical energy (702).

4. The assembly (400, 450) of one of the claims 1-2, wherein each energy (702, 742) that the submersible device (300, 350, 705, 725, 745) receives through the submarine line (304, 600) and the energy (703, 721, 743) that the submersible device (300, 350, 705, 725, 745) transfers to the submersible vehicle (200, 250, 710, 730) is electrical energy or hydraulic energy.

5. The assembly (400, 450) of one of the preceding claims, wherein the submersible vehicle (200, 250, 710, 730) further comprises a hydraulic unit (712) to transform electrical energy into hydraulic energy, and/or to transform hydraulic energy into electrical energy; and wherein the energy that the hydraulic unit (712) of the submersible vehicle (200, 250, 710, 730) transforms is at least part of the energy (703, 721, 743) that the submersible vehicle (200, 250, 710, 730) receives from the submersible device (300, 350, 705, 725, 745).

6. The assembly (400, 450) of one of the preceding claims, wherein:
the submarine line (304, 600) comprises at least one line (607) for transmitting data; and
the submersible device (300, 350, 705, 725, 745) is further configured to transmit and receive data (709) through the submarine line (304, 600), and further configured to transmit data (704) to the submersible vehicle (200, 250, 710, 730) wirelessly or through a submersible connection line from the submersible device to the submersible vehicle.

7. The assembly (400, 450) of one of the preceding claims, wherein the submersible vehicle (200, 250, 710, 730) further comprises:
means (203) for handling at least one of: the submarine line (304, 600), a line accessory, a line connector, and an obstacle on a sea floor (500); and
means (206) for digging a trench, wherein the means (206) for digging a trench preferably comprise at least one jet trencher; and
wherein the submersible vehicle (200, 250, 710, 730) is further configured to energize with energy received from the submersible device (300, 350, 705, 725, 745) at least one of: the means of movement (208), the means (203) for handling, and the means (206) for digging a trench.

8. The assembly (400, 450) of one of the preceding claims, wherein:
the chassis (201, 251) is adapted to receive and attach the submersible device (300, 350, 705, 725, 745); and
the submersible device (300, 350, 705, 725, 745) is adapted to be attached to the chassis (201, 251) in a removable manner.

9. A method for installing a submarine line (304, 600) with an assembly (400, 450), the assembly comprising a submersible vehicle (200, 250, 710, 730) and a submersible device (300, 350, 705, 725, 745), the method comprising:
transferring energy (702, 742) from an installation (101, 501, 701, 741) that comprises an energy source to the submersible device (300, 350, 705, 725, 745) through the submarine line (304, 600);
transferring energy (703, 721, 743) from the submersible device (300, 350, 705, 725, 745) to the submersible vehicle (200, 250, 710, 730); and
laying the submarine line (304, 600) in a sea environment (550) with the assembly (400, 450) while energy (702, 742) is transferred to the submersible device (300, 350, 705, 725, 745) through the submarine line (304, 600) and while energy (703, 721, 743) is transferred to the submersible vehicle (200, 250, 710, 730) from the submersible device (300, 350, 705, 725, 745).

10. The method of claim 9, wherein the submersible device (300, 350, 705, 725, 745) is arranged on a chassis (201, 251) of the submersible vehicle (200, 250, 710, 730); and wherein the submersible device (300, 350, 705, 725, 745) comprises the submarine line (304, 600).

11. The method of one of the claims 9 to 10, further comprising:
transforming electrical energy into hydraulic energy with a hydraulic unit (707) of the submersible device (300, 350, 705, 725, 745); and
transferring hydraulic energy (721, 743) to the submersible vehicle (200, 250, 710, 730).

12. The method of one of the claims 9 to 10, wherein each energy (702, 742) that is transferred to the submersible device (300, 350, 705, 725, 745) through the submarine line (304, 600) and the energy (703, 721, 743) that the submersible device (300, 350, 705, 725, 745) transfers to the submersible vehicle (200, 250, 710, 730) is electrical energy or hydraulic energy.

13. The method of one of the claims 9 to 12, further comprising transforming electrical energy into hydraulic energy, and/or hydraulic energy into electrical energy with a hydraulic unit (712) of the submersible vehicle (200, 250, 710, 730); and in which the energy that the hydraulic unit (712) of the submersible vehicle (200, 250, 710, 730) transforms is at least part of the energy (703, 721, 743) that the submersible vehicle (200, 250, 710, 730) receives from the submersible device (300, 350, 705, 725, 745).

14. The method of one of the claims 9 to 13, further comprising:
transmitting data (709) from the installation (101, 501, 701, 741) to the submersible device (300, 350, 705, 725, 745) through the submarine line (304, 600); and
transmitting data (704) from the submersible device (300, 350, 705, 725, 745) to the submersible vehicle (200, 250, 710, 730) wirelessly or through a submersible connection line of the submersible device to the submersible vehicle.

15. The method of one of the claims 9 to 14 or the assembly of one of the claims 1 to 8, wherein the submarine line (304, 600) comprises at least one conduit (604) for transmission of a liquid material.
